# EUROPEAN PATENT APPLICATION

(11) **EP 4 672 672 A1**
(43) Date of publication of application: **31.12.2025**
(21) Application number: 24306060.5
(22) Date of filing: 28.06.2024
(51) Int. Cl.: H04L 9/40, H04L 9/32, G06F 21/44, G06F 21/57

(54) **VERIFICATION OF A DEVICE BY A VERIFIER ENTITY BASED ON A DEVICE ATTESTATION**

(71) Applicant: THALES DIS FRANCE SAS, 92190 Meudon (FR)
(72) Inventor: EL MAROUANI, Abdellah, 13011 MARSEILLE (FR); BRUNA, Hugo, 84100 ORANGE (FR)
(74) Representative: Lotaut, Yacine Diaw

(57) **Abstract**

A method of verification of a device (101) by a verifier entity in a communications network, the method comprising:
- receiving (221) by the device, from an issuer entity (130), information derived from device information descriptive of the device or of a component of the device;
- determining (222) binding data, by the device, the binding data comprising the information derived from the device information and being signed by the device;
- transmitting (223) the binding data to the issuer entity;
- receiving (230), by the device and from the issuer entity, a device attestation (300) comprising the device information, the binding data and a signature of the issuer entity;
- storing (231) the device attestation in the device;
wherein, upon reception of a verification request from a verifier entity, the device presents the device attestation to the verifier entity.

## Description

### FIELD OF USE

This disclosure is related to the field of verification of a device, for allowing an access to a service via a communications network, in particular for devices having digital wallets for storing digital credentials.

Aspects of the disclosure are useful in the context of issuing digital credentials by authorities such as a government or a bank.

### BACKGROUND

Public authorities (governments, universities) and private authorities (banks) are willing to issue digital credentials to be stored in a digital wallet or secure element, which can be accessed via a device or stored in the device. These digital credentials may encompass identity documents, passports, bank credentials such as IBAN, diploma, etc.

These digital credentials often comprise sensitive information such as Personal Identifying Information, PII. For this reason, it is often required from the issuing authority to implement some security control before issuance of a digital credential to a user digital wallet.

However, the diversity of wallet providers and device makers (of devices hosting digital wallets) make it difficult to have a unified and field proven security control, that can be trusted by the issuing authority.

There is therefore a need for a solution for verifying a device (the device itself or a digital wallet or a secure element of the device), before implementing a service requested by the device, in particular before issuance of a digital credential to be stored in the device. It is also preferable for this solution to be interoperable and verifiable with a high level of trust.

### SUMMARY

Aspects of the disclosure address the previously discussed situation..

A first aspect of the disclosure concerns a method of verifying a device by a verifier entity in a communications network, the method comprising:
- receiving by the device, from an issuer entity, information derived from device information descriptive of the device or of a component of the device;
- determining binding data, by the device, the binding data comprising the information derived from the device information and being signed by the device;
- transmitting the binding data to the issuer entity;
- receiving, by the device and from the issuer entity, a device attestation comprising the device information, the binding data and a signature of the issuer entity;
- storing the device attestation in the device.

Upon reception of a verification request from the verifier entity, presenting the device attestation to the verifier entity.

Therefore, the disclosure enables store a device attestation that is obtained based on device information related to the device, or to a component of the device, such as a secure element or a digital wallet, and to binding data. Preferably, the issuer entity is an entity associated with a device manufacturer, or a provider of the secure element or wallet provider. Indeed, the device information is natively known from these actors : the device attestation can therefore be delivered and signed by an Original Equipment Manufacturer, OEM (or by a provider of secure element or digital wallet). A verifier is therefore able to verify that the device information complies with a policy of the verifier entity, the integrity of the device attestation, which is signed by the issuer entity. The binding data enables to verify that the device presenting the device attestation is the same as the one described by the device information.

Therefore, the disclosure allows a high level of trust for the verifier entity (which can be a digital credential issuing authority), as it can proceed to several security checks based on the different signatures of the device attestation. The verifier entity can also check the compliance of the device information with a verifier policy, before providing an access to a service.

According to some embodiments, the device attestation may have a data structure of a Verifiable Credential, VC, comprising:
- a claim section comprising the binding data and the device information;
- a VC proof section comprising an attestation proof, the attestation proof being the signature of the issuer entity.
Presenting of the device attestation may comprise generating a presentation of the device attestation, the presentation having a data structure of a Verifiable Presentation, VP, comprising:
- a VC section comprising the device attestation;
- a VP proof section comprising a presentation proof, wherein the presentation proof is a signature of the VC section by the device.

Therefore, according to these embodiments, the use of the Self Sovereign Identity, SSI, approach enables to ensure interoperability of the generated and stored device attestation. The World Wide Web Consortium, W3C, issued a recommendation about the Verifiable Credentials data model, version 1.1, on March 3^{rd} 2022.The VC environment allows the check the integrity of the device attestation, in particular when the VC is signed by the issuer entity. The VC environment also proposes Verifiable Presentations which enables a holder (the device) of a VC to present a VC to a verifier (the verifier entity). The verifier can then verify the integrity of the VC based on a digital signature of the holder.

According to some embodiments, the verification request may be received after the device transmits a service request to the verifier entity, in order to access to a service provided by the verifier entity. The verifier entity may perform at least one verification on the presentation of the device attestation, and the service may be executed by the verifier entity if the at least one verification is positive.

Therefore, the verifier entity may perform at least one verification, and preferably several verifications, before providing a service to the device. This enables to ensure a high level of trust for the verifier entity, before implementation of the service.

In complement, the service may comprise generating a digital credential and transmitting the digital credential to the device, for storage in a digital wallet or in a secure element of the device.

Services, which aim at providing digital credentials require a high level of trust, because digital credentials may comprise critical PII. It is for example the case when the verifier entity is a private or public authority.

In complement, the at least one verification performed by the verifier entity may comprise:
- verification of the attestation proof; and/or
- verification of the presentation proof; and/or
- verification that the binding data is signed by the same device as the presentation proof.

Verification of the attestation proof enables to check the origin of the device attestation and the integrity of the device attestation. Verification of the presentation proof enables to check that the device transmitting the presentation is the one having signed the presentation (proof of possession). The verification that the binding data is signed by the same device as the presentation proof, enables to verify that the device presenting the device attestation is the one corresponding to the device information in the device attestation. Therefore, the device attestation ensures a high level of trust as it permits several verifications to be performed on it.

Still in complement, the at least one verification may comprise a verification that an attestation revocation associated with the device attestation has not been published in a public registry.

This enables to verify the validity of the device attestation. The validity can be advantageously checked before further verifications are performed (proof of possession, proof of integrity and origin, and proof that the device presenting the device attestation is the one described by the device information in the device attestation).

According to some embodiments, the issuer entity, upon reception of the binding data from the device, may generate the device attestation, transmit the device attestation to the device, and store a hash H1 of the device attestation in a public registry.

This enables the verifier entity to check that the device attestation has been previously published, before verifying the device attestation. The level of trust associated with the device attestation is therefore reinforced.

In complement, the attestation revocation may be a revocation hash obtained by hashing a predetermined string with the hash H1 of the device attestation.

This enables the verifier entity to check whether the device attestation has been revoked or not by the issuer entity, by a simple computation based on the device attestation.

In complement, upon detection of a predetermined event by the issuer entity, the issuer entity may generate an attestation revocation of the device attestation, and transmit the attestation revocation to the public registry.

This enables the issuer entity to revoke the attestation revocation, in particular upon detection of an event such as a fraud, theft or loss of the device, or other situations in which the device attestation could be used by an attacker.

According to some embodiments, the device information may comprise one or several of the following information:
- -a unique identifier of the device, of a secure element of the device and/or of a digital wallet of the device; and/or

- a type of secure area of the device; and/or
- information regarding cryptographic protocols and key derivation mechanisms, supported by the device, by the secure element of the device and/or by the digital wallet of the device; and/or
- information regarding cryptographic primitives supported by the device, by the secure element of the device and/or by the digital wallet of the device; and/or
- information related to security mechanisms of the device, of the secure element of the device and/or of the digital wallet of the device.

Such types of device information are relevant for the verifier entity to determine whether the device, or its components, comply with a security policy of the verifier entity, in particular in the context in which the verifier entity delivers digital credentials to the device.

According to some embodiments, the device may receive the device information and a first nonce from the issuer entity, and the binding data may comprise a hash of the device information, the first nonce and an identifier of the device.

Using a nonce enables to ensure the unicity of the binding data, and ensures protection against replay attacks.

In complement, upon receiving of the binding data, the issuer entity may generate a second nonce, and the device attestation may comprise the hash of the device information, the binding data, the second nonce and the signature of the issuer entity.

Using a nonce ensures the unicity of the device attestation, and ensures protection against replay attacks.

A second aspect of the disclosure concerns a computer program comprising instructions arranged for implementing the method according to the first aspect of the disclosure, when said instructions are executed by a processor.

A third aspect of the disclosure concerns a device comprising a network interface and a processor configured for:
- receiving information derived from device information, from an issuer entity, the device information being descriptive of the device or of a component of the device;
- determining binding data comprising the information derived from the device information and being signed by the device;
- transmitting the binding data to the issuer entity;
- receiving, from the issuer entity, a device attestation comprising the device information, the binding data and a signature of the issuer entity;
- storing the device attestation in a memory of the device.

Upon reception of a verification request from a verifier entity, the processor is further configured for presenting the device attestation to the verifier entity

A fourth aspect of the disclosure concerns a system comprising the device according to the third aspect of the disclosure, an issuer entity and a verifier entity.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

[Fig. 1] shows an environment for implementing a method of verifying a device according to some embodiments of the disclosure;
[Fig. 2] illustrates the steps of an attestation issuance phase of a method of verifying a device according to some embodiments of the disclosure;
[Fig. 3a] illustrates a data structure of a device attestation, according to some embodiments of the disclosure;
[Fig. 3b] illustrates a data structure of a verifiable presentation of a device attestation, according to some embodiments of the disclosure;
[Fig. 4] illustrates the steps of an an attestation verification phase of a method according to some embodiments of the disclosure;
[Fig. 5] illustrates the steps of an attestation revocation phase of a method according to some embodiments of the disclosure;
[Fig. 6] shows the structure of a device according to some embodiments of the disclosure;
[Fig. 7] shows the structure of an issuer entity according to some embodiments of the disclosure;
[Fig. 8] shows the structure of a verifier entity according to some embodiments of the disclosure.

### DETAILED DESCRIPTION

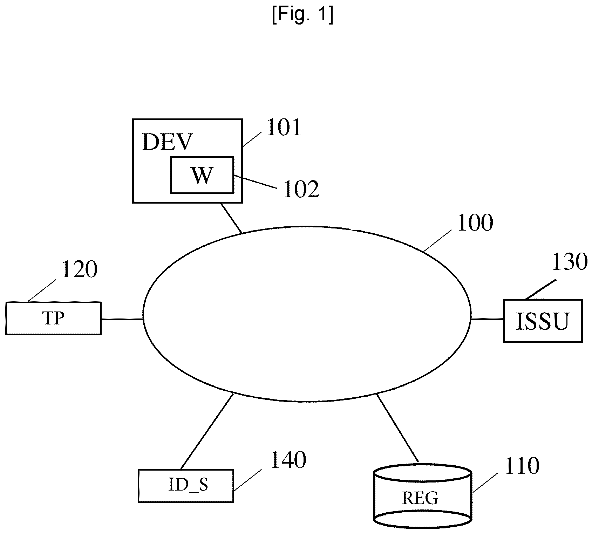

Figure 1 shows an exemplary environment for implementing a method of verifying a device according to some embodiments of the disclosure.

The environment can be supported by a communications network 100, such as an extended IP network that allows to connect together network entities that are located in different places, that can be remote from each other.

A user device 101 is used by a user to access the network 100. According to some embodiments of the disclosure, the user device 101 may implement a digital wallet 102 and/or may comprise a secure element, such as an embedded Secure Element, eSE. No restriction is attached to the user device 101, which can be any user device, handheld or not, such as a laptop, a desk computer, a Smartphone, a touch pad, etc.

The digital wallet 102 allows the user of the user device 101 to store digital credentials on the user device 101. The digital wallet 102 may be a software application executed on the user device 101, that is able to store and access the digital wallet 102 in a secure storage of the user device 101, or in a cloud server that can be accessed via the network 100 and that is not shown on figure 1.

The environment according to the disclosure may further comprise an identity registry 140, that may store identifier, such as user identifiers, device identifiers and/or organization identifiers. Device identifiers according to the disclosure may encompass:
- identifiers related to a device, such as the user device 101;
- identifiers related to an eSE of the user device 101; and
- identifiers related to a digital wallet, such as the digital wallet 102.

Organization identifiers may be an identifier related to a device manufacturer (also noted OEM, for "Original Equipment Manufacturer), to a manufacturer or provider of an eSE, or to the provider of a digital wallet.

No restriction is attached to the format of the identifiers stored in the identity registry 140. Preferably, the identifiers stored in the identity registry 140 are Decentralized IDentifiers, DIDs.

In contrast to typical identifiers, DIDs are designed so that they may be decoupled from centralized registries and identity providers. DIDs are designed to enable individuals and organizations to generate their own identifiers, including device identifiers, using systems they trust. These new device identifiers enable entities to prove control over them by authenticating using cryptographic proofs such as digital signatures. In particular, when creating a DID, the user can decide which personal information is disclosed by the DID. When creating a DID for a device, eSE or digital wallet, the user can decide which device information is disclosed by the DID.

A DID generally comprises three parts, in the form of an URI, for Unified Resource Identifier:
- a first part being a DID URI scheme identifier, which enables, when parsing the URI, to determine that the URI refers to a DID. The first part is "did";
- a second part identifying a DID method. The DID method may be defined by a DID method specification, which specifies the precise operations by which DIDs and DID documents are created, resolved, updated and deactivated. For example, the second part may consist of the following sequence of alphanumeric characters "example";
- a third part, which is a DID method-specific identifier, which identifies a DID according to the format defined by the method corresponding to the second part. For example, the third part may consist of the following sequence of alphanumeric characters "123456789abcdefghi".

Each part of the DID may be separated by a given character, such as ":" according to the URI format. In the example given above, the DID is as follows: did:example: 123456789abcdefghi

The identity registry 140 records each DID in association with a DID document.

A DID document contains information associated with the DID, such as ways to cryptographically authenticate a DID controller (which may be the same person, device or organization as the DID subject, that is the person, device or organization associated with the DID), such as a public key for example.

The concept of DID, as well as Verifiable Credentials VC and Verifiable Presentation, VP, which are described hereafter, are part of the Self-Sovereign Identity, SSI, approach.

Any entity accessing the network 100 can access to the DID document associated with a DID, by generating a DID URL based on the DID and by accessing the identity registry 140 using the DID URL.

The DID URL extends the syntax of the DID to incorporate other standard URI components such as path, query, and fragment, in order to locate a particular resource, for example, a cryptographic public key inside a DID document.

The identity registry 140 may also comprise certificates identifying public keys and cryptographic methods, associated with network entities identified by DIDs, such as the user device 101 (or the digital wallet 102 or an eSE of the user device 101) and an issuer entity 130, and that can be retrieved via the network 100.

The identity registry 140 may be integrated in a server, or may be a distributed registry stored in several servers/terminals.

In an aspect of the disclosure, the issuer entity 130 is any terminal or server of an entity in charge of providing a device attestation, the device attestation being related to a device, an eSE or a digital wallet. In case of the attestation being related to the device 101, the issuer entity 130 may be associated with the OEM of the device 101. In case of the attestation being related to an eSE of the device 101, the issuer entity 130 may be associated with a manufacturer or provider of the eSE. In case of an attestation being related to a digital wallet, the issuer entity may be associated with a provided of the digital wallet.

In what follows, it is considered, for illustrative purpose only, that aspects of the disclosure are applied to issuance of a device attestation related to the device 101, and that the issuer entity 130 is associated with an OEM of the device 101. However, as previously explained, the disclosure also applies to issuance of a device attestation related to an eSE or to a digital wallet of the device 101.

The environment may further comprise a verifier entity 120, which may be a server or a terminal associated with a verifier of the device attestation according to the disclosure. In the context of the disclosure, the verifier may be associated with an organization providing a service, in particular with a public or private authority in charge of issuing at least one credential to the device 101.

A public registry 110 can also be accessed via the network 110, and may store attestation data and attestation revocation data that are published by entities accessing the registry 110, as explained in what follows. The registry 110 may be integrated in a single centralized server or may be a distributed ledger, such as a Blockchain, that is distributed in several servers/terminals.

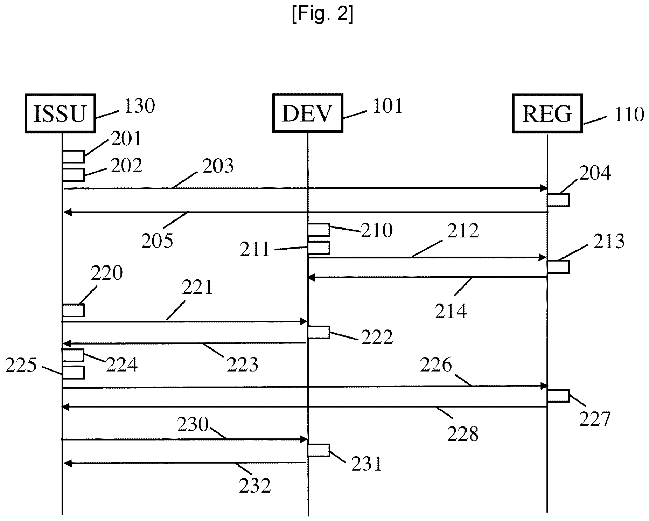

Figure 2 illustrates the steps of a device attestation issuance phase of a method of verifying a device according to some embodiments of the disclosure.

The device attestation issuance phase may be carried out by the device 101, the issuer entity 130 and the registry 110 that have been described above. In the example described here, the OEM is the issuer of the device attestation and the device 101 is the holder of the device attestation.

The device attestation issuance phase may comprise preliminary steps 201 to 206, which aim at obtaining and publishing public cryptographic keys for the holder and the issuer involved in the subsequent steps.

At a step 201, the issuer entity 130 obtains, for example generates, a pair of issuer cryptographic keys OEM_KEYS_PAIR, comprising a private or secret issuer key PRIVATE_OEM_KEY and a public issuer key PUBLIC_OEM_KEY.

At a step 202, the issuer entity 130 generates a DID of the issuer associated with the public issuer key PUBLIC_OEM_KEY.

At a step 203, the issuer entity 130 transmits the generated issuer DID of the issuer, to the public registry 110. As explained above, the DID of the issuer may also be stored in the identity registry 140 in association with a DID document.

At a step 204, the public registry 110 publishes the issuer DID associated with the issuer key PUBLIC_OEM_KEY.

At a step 205, the public registry 110 may transmit a first confirmation to the issuer entity 130, the first confirmation indicating that the issuer DID is correctly published by the public registry 110.

At a step 210, the device 101 obtains, or generates, a pair of holder cryptographic keys. As previously indicated, the example of a device attestation related to the device 101 is considered, so that the holder is the device 101. In other embodiments, the holder is the digital wallet 102 or the eSE of the device 101.

The pair of holder cryptographic keys comprise a public device key PUBLIC_DEVICE_KEY and a private or secret device key PRIVATE_SECRET_KEY.

At a step 211, the device 101 generates a holder DID associated with the generated public device key PUBLIC_DEVICE_KEY.

At a step 212, the device 101 transmits the holder DID associated with the public device in the public registry 110. As explained above, the holder DID of the device 101 may also be stored in the identity registry 140 in association with a DID document.

At a step 213, the public registry 110 publishes the holder DID associated with the public device key PUBLIC_DEVICE_KEY.

At a step 214, the public registry 110 may transmit a second confirmation to the device 101, the second confirmation indicating that the holder DID is correctly published by the public registry 110.

It is to be noted that implementations of steps 201 to 205 and steps 210 to 214 are asynchronous, and the set of steps 201 to 205 can be performed after steps 210 to 214.

At a step 220, the issuer entity 130 obtains a set of device information related to the device 101. The device information may be device fingerprint information which are descriptive of the device. For example, the device information can uniquely identify the device 101 and the technical features of the device 101, in particular technical features related to security mechanisms of the device 101. The device information may comprise:
- a unique identifier of the device 101, such as an International Mobile Equipment Identity, IMEI, and/or the DID of the device 101; and/or
- a type of secure area of the device, such as a type of eSE or digital wallet 102;
- information regarding cryptographic protocols and key derivation mechanisms, supported by the device 101; and/or
- information regarding cryptographic primitives supported by the device 101, and key or block sizes; and/or
- further information related to security mechanisms of the device 101.

As the issuer is the OEM, it can access to the device information as it may be determined during manufacturing of the device 101.

The device attestation may have the structure of a Verifiable Credential. In that context, the device information may be introduced in a claim section of the VC and may be referred to DEVICE_ATTESTATION_CLAIMS in what follows.

At a step 221, the issuer entity 130 sends a first request (a binding data request) to the device 101, in order to request binding data from the device 101. The binding data binds the device 101 to the device attestation generated in the following steps. To this end, the first request comprises information derived from the device information DEVICE_ATTESTATION_CLAIMS, so as to enable the device 101 to sign the derived information. The derived information may be a hash of the device information DEVICE ATTESTATION_CLAIMS, obtained by applying a predefined hash function. Alternatively, the information derived from the device information is the device information itself. According to some embodiments, the first request further comprises a first nonce. A nonce is an arbitrary number that can be used just once in a communication. The first nonce can be randomly or pseudo-randomly generated by the issuer entity 130. Using a nonce enables to ensure that the communication can not be reused in replay attacks.

At a step 222, the device 101 generates binding data based on the received information derived from the device information, and optionally on the first nonce (if received at step 221).

Advantageously, the binding data can also have the structure of a VC, which is noted VC_BINDING_DATA. For example, the binding data comprises, in a claim section VC_DEVICE_BINDING_CLAIMS of the binding data

### VC_DEVICE_BINDING:

- the holder DID of the device 101, generated at step 211;
- the first nonce received if received at step 221;
- the information derived from the device information

### DEVICE_ATTESTATION_CLAIMS, such as the hash of the device information.

In addition, the binding data as a VC comprises a proof section VC_DEVICE_BINDING_PROOF, comprising a binding proof which is obtained by signing the claim section VC_DEVICE_BINDING_CLAIMS of the binding data, using the private device key PRIVATE_DEVICE_KEY obtained at step 210.

At a step 223, the device 101 transmits the binding data VC_DEVICE_BINDING to the issuer entity 130.

At a step 224, the issuer entity 130 determines a device attestation, based on:
- the device information DEVICE_ATTESTATION_CLAIMS;
- the binding data VC_DEVICE_BINDING received from the device 101; and
- optionally, a second nonce.

The device attestation is signed by the issuer entity 130, using the private issuer key PRIVATE_OEM_KEY.

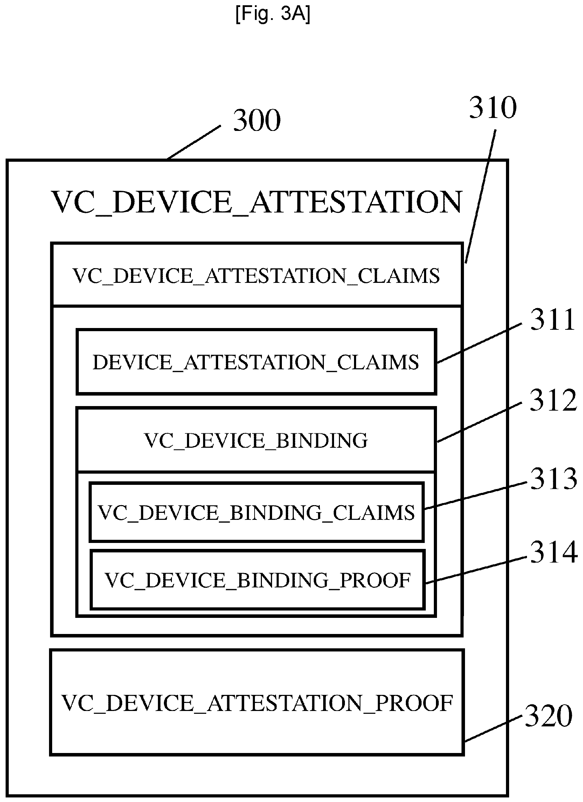

For example the issuer entity 130 generates the device attestation in the form of a VC, named VC_DEVICE_ATTESTATION, as shown on figure 3a.

As shown on figure 3a, the device attestation VC_DEVICE_ATTESTATION, referenced 300, comprises:
- a claim section VC_DEVICE_ATTESTATION_CLAIMS 310 comprising the device information DEVICE_ATTESTATION_CLAIMS 311 and the binding data VC_DEVICE_BINDING 312 (comprising the claim section VC_DEVICE_BINDING_CLAIMS 313 and the proof section VC_DEVICE_BINDING_PROOF 314), and optionally the second nonce, not shown on figure 3a;
- a proof section VC_DEVICE _ATTESTATION_PROOF 320 comprising an attestation proof obtained by signing the claim section VC_DEVICE_ATTESTATION_CLAIMS 310 using the private issuer key PRIVATE_ISSUER_KEY. The signature may be based on a cryptographic algorithm that enables privacy features, such as a Zero Knowledge Proof, ZKP, algorithm, or using Selective Disclosure signature.

In an aspect of the disclosure, and according to the VC data structure, the device attestation 300 may comprise a metadata section before the claim section 310.

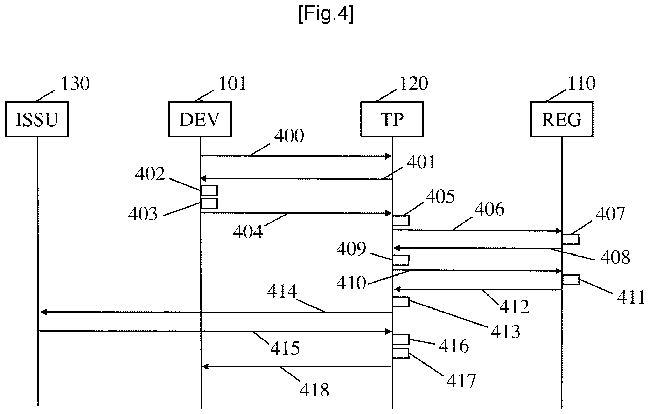

The use of the Self Sovereign Identity, SSI, approach for verifying a device, wallet or eSE, by delivering a device attestation 300 in the form of a VC enables to ensure interoperability. It makes the device attestation 300 easy to issue, share and read, and is also verifiable with a high level of trust, as it is based on cryptography and signatures. The device presentation 300 according to the disclosure indeed allows a verifier to check the proof of the device origin, the integrity of the device attestation 300 and of the issuer origin, and the proof of possession, as it will be further explained referring to figure 4 described in what follows.

Referring back to figure 2, after the device attestation 300 is generated by the issuer entity 130 at step 224, the issuer entity 130 may calculate a hash H1 of the device attestation 300, at a step 225, and may transmit the calculated hash H1 of the device attestation 300 to the public registry 110 at a step 226, in order to publish it.

At a step 227, the public registry 110 publishes the hash H1 of the device attestation 300 received from the issuer entity 130, and may return a third confirmation to the issuer entity 130 at a step 228, the third confirmation indicating that the hash H1 of the device attestation 300 has been correctly published.

At a step 230, the issuer entity 130 transmits the device attestation 300 to the device 101, for storage in a memory of the device 101

At step 231, upon reception of the device attestation 300, the device 101 stores the device attestation 300 in a memory, and preferably in a secure area of a memory of the device 101, for example in Read-Only Memory, ROM.

At step 232, the device 101 may transmit a fourth confirmation to the issuer entity 130, the fourth confirmation indicating that the device attestation 300 has been correctly stored in memory.

It is to be noted that steps 230 to 232 may alternatively be carried out before or in parallel to steps 225 to 228.

Figure 4 shows the steps of a device attestation verification phase of a method for verifying a device according to some embodiments of the disclosure.

The device attestation verification phase may be implemented after the device attestation 300 is stored in the memory of the device 101. For example, it may be implemented when the user of the device 101 requests, at step 400, to obtain a service from an organization associated with the verifier entity 120, which can be a public or private authority. The service can for example consist in providing one or several digital credentials, to be stored in the device 101, for example in the digital wallet 102 of the device 101.

To this end, the device 101 may transmit a service request to the verifier entity 120 at a step 400.

Upon reception of the service request at step 400, the verifier entity 120 transmits a verification request to the device 101 at a step 401.

Upon reception of the verification request at step 401, the device 101 may generate a third nonce at a step 402, this step being optional.

Also upon reception of the verification request at step 401, the device 101 prepares a presentation of the device attestation 300, to be presented to the verifier entity 120. The presentation is preferably in the form of a Verifiable Presentation, in particular in the embodiments in which the device attestation 300 is in the form of a VC.

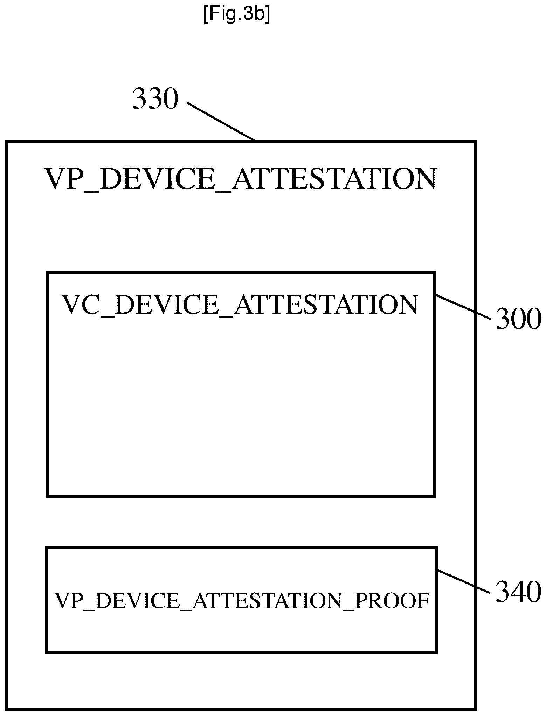

The data structure of a VP is represented on figure 3b, and the presentation of the device attestation 300, referenced 330, comprises:
- a VC section 340 comprising at least one VC. According to the disclosure, the VC section 340 comprises the device attestation 300 in the form of a VC, and may further comprise the third nonce generated at optional step 402;
- a proof section 350 comprising a presentation proof which can be obtained by signing the VC section 340 by using the private holder key PRIVATE_DEVICE_KEY of the device 101.

According to the VP data structure, the VP 330 may further comprise a metadata section before the VC section 340. In that case, the presentation proof is obtained by signing both the metadata section and the VC section 340. The third nonce can be included in the metadata section instead of the VC section 340. The metadata section may further comprise contextual information, a type of the VP and/or an identifier of the holder of the VP (the device 101), such as the DID of the device 101.

The data structures of VC and VP described on Figures 3a and 3b comply with the recommendation of the W3C related to the Verifiable Credentials data model version 1.1 released on March 3^{rd} 2022.

Referring back to figure 4, after the presentation of the device attestation 300 (the VP 340) is prepared by the device 101 at step 403, the device 101 transmits the presentation of the device attestation 300 to the verifier entity 120 at a step 404.

At a step 405, upon reception of the presentation of the device attestation 300 from the device 101, the verifier entity 120 generates a hash H2 of the device attestation 300, by extracting the device attestation 300 from the presentation 340.

At a step 406, the verifier entity 120 transmits the hash H2 of the device attestation 300 to the public registry 110, so that the public registry 110 checks whether the hash H2 has been previously published or not.

At a step 407, the public registry 110 checks if the hash H2 has been previously published or not.

Depending on whether the public registry 110 determines that the hash H2 has been previously published or has not been previously published, the public registry 110 sends a first response to the verifier entity 120 at a step 408.

In a first situation, the public registry 110 determines that the hash H2 has been previously published. In the example described above, the hash H2 is identical to the hash H1 so that the public registry 110 determines that the hash H2 has been previously published. In that situation, the first response is positive and is a confirmation that H2 has been previously published. In the first situation, the method goes on with step 409.

In a second situation, the public registry 110 determines that the hash H2 has not been previously published. The first response is negative and indicates that H2 has not been previously published. In that second situation, upon reception of the negative first response, the verifier entity 120 may decline the service request received at step 400 because the device attestation 300 contained in the VP 340 received from the device 100, has not been published by the issuer.

At step 409 (upon reception of a confirmation at step 408), the verifier entity 120 may verify that the device attestation 300 is not revoked in the public registry 110. Step 409 is optional and, if step 409 is not performed, the method goes to step 413 described in what follows.

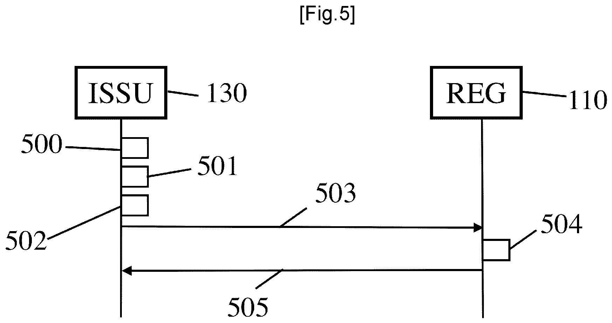

According to some embodiments, to verify that the device attestation 300 is not revoked at step 409, the verifier entity 120 may concatenate the string "REVOKED" and the hash H2 of the device attestation 300, determined at step 405. The concatenation is then hashed to obtain a revocation hash H3 (the revocation process is better understood when referring to figure 5 described in what follows).

At a step 410, the verifier entity 120 transmits the revocation hash H3 to the public registry 110, so that the public registry 110 checks whether the revocation hash H3 has been previously published or not (if so, the device attestation 300 has been previously revoked).

At a step 411, the public registry 110 checks whether the revocation hash H3 has been previously published or not.

Based on the result of the checking step 411, the public registry determines a second response and sends it to the verifier entity 120, at a step 412, the second response indicating whether the device attestation 300 is revoked or not.

In some situations, the revocation hash H3 has not been previously published in the public registry 110, so the second response indicates that the device attestation 300 has not been revoked.

In some other situations, the revocation hash H3 has been previously published in the public registry 110, so the second response indicates that the device attestation 300 has been revoked. In these situations, the second response may comprise an attestation revocation signed by the entity having revoked the device attestation 300, as it is explained in what follows referring to figure 5. The verifier entity 120 may then verify that the issuer entity 120 has signed the revocation attestation, based on the public issuer key PUBLIC_OEM_KEY (stored in the public registry 110 and/or in the identity registry 140).

According to an alternative to steps 410 to 412:
- the verifier entity 120 requests a revocation list from the public registry 110,
- the public registry sends, in response, the revocation list, and
- the verifier entity 120 checks whether the revocation hash H3 or the hash H2 is comprised in the revocation list.

If the hash H3 or H2 is comprised in the revocation list, then the verifier entity 120 determines that the device attestation 300 is revoked. Else, if the hash H3 or H2 is not comprised in the revocation list, then the verifier entity 120 determines that the device attestation 300 has not been revoked.

If the verifier entity 120 determines that the device attestation 300 has been revoked, based on the second response or on the revocation list, then the verifier entity 120 may interrupt the communication with the device 101 and reject the service request received at step 400. Else, the method goes on with step 413.

At a step 413, the verifier entity 120 performs at least one of the following verifications, and preferably all of the following verifications:

- verification of the attestation proof comprised in the proof section 320 of the device attestation 300. As previously explained, the attestation proof is obtained based on a signature of the issuer entity 130, using its private issuer key PRIVATE_OEM_KEY. To verify the attestation proof, the verifier entity 120 obtains the public issuer key PUBLIC_OEM_KEY, which is associated with the DID of the issuer entity 130 stored in the public registry 110. The public issuer key PUBLIC_OEM_KEY may be comprised in the DID document stored in the identity registry 140 in association with the DID of the issuer entity 130. Verification of the attestation proof enables to ensure the integrity of the device attestation 300 and that it originates from the device manufacturer associated with the issuer entity 130;

- verification of the presentation proof comprised in the proof section 350 of the presentation 330 of the device attestation 300. As previously explained, the presentation proof is obtained based on a signature of the device 101, using its private holder key PRIVATE_DEVICE_KEY. To verify the presentation proof, the verifier entity 120 obtains the public holder key PUBLIC_DEVICE_KEY, which is associated with the DID of the device 101 stored in the public registry 110. The public holder key PUBLIC_DEVICE_KEY may be comprises in the DID document stored in the identity registry 140 in association with the DID of the device 101. Verification of the presentation proof enables to prove that the device 101 involved in the communication possesses the device presentation 300, because it applies a signature based on its private key in the presentation 330;

- verification that the binding proof comprised in the proof section 314 of the binding data 312 originates from the same device as the device 101 presenting the presentation 330. To this end, the verifier entity 120 may verify that the same private holder key has been used to generate the binding proof and the presentation proof. Verification of the binding proof therefore enables to verify that the device information 311 in the claim section 310 of the device attestation 300 corresponds to the device 101 presenting device attestation 300 in the presentation 330.

If every verification of the at least one verification is positive, then the method goes to step 416, described in what follows.

However, if at least one of the at least one verification is negative, the communication with the device 101 is interrupted and the service request received at step 400 is rejected. In particular, if the verifier entity 120 detects that the binding proof comes from a device distinct from the device signing the presentation 330, then an alert can be sent to the issuer entity 130 identified in the device attestation 300. The alert may comprise the device presentation 300, or the hash H2 of the device presentation 300, so that the issuer entity 130 can identify and revoke the device presentation 300, as it is explained when referring to figure 5 described in what follows. Upon reception of the alert, the issuer entity 130 may send a confirmation that the alert is well received, at a step 415, to the verifier entity 120.

At step 416 (if every verification performed at step 413 is positive), the verifier entity 120 may verify that the device information DEVICE_ATTESTATION_CLAIMS matches with a verifier policy. To this end, the verifier entity 120 may apply a predetermined set of at least one rule to the device information DEVICE_ATTESTATION_CLAIMS. If the device information does not match with the verifier policy, then the communication with the device 101 may be interrupted and the service request received at step 400 is rejected by the verifier entity 120.

If the device information matches with the verifier policy, then the verifier entity 120 may implement the service at step 417. Implementation of the service may comprise retrieving or preparing a digital credential to be delivered to the device 101.

The digital credential may be transmitted to the device 101 at a step 418, for storage in the eSE or in the digital wallet 102.

Therefore, the device attestation 300 according to the disclosure allows interoperability and a verification process with a high level of trust, as it allows proof of validity (using the revocation check), proof of integrity and issuer origin, proof of possession and proof that the device information in the device attestation 300 are form the same device as the one signing the presentation 330.

Figure 5 shows the steps of a revocation phase of a method for controlling a device, according to some embodiments of the disclosure.

The revocation phase can be implemented by the issuer entity 130, using the public registry 110.

At a step 500, the issuer entity 130 detects an event related to a device attestation, the event requiring revocation of the device attestation. This event may be an attack on a device associated with the device attestation, a fraud situation, a root detection or that the device associated with the device attestation is lost or stolen. The event may also be the reception of the alert by the verifier entity 120 at step 414, as previously described.

In what follows, it is considered, for illustrative purposes, that an event is detected requiring revocation of the device attestation 300.

Upon detection of the event, the issuer entity 130 computes an attestation revocation at step 501. To this end, the issuer entity 130 may concatenate the hash H1 of the device attestation 300 with the string "REVOKED". The concatenation is then hashed to obtain the revocation hash H3 previously described.

At step 502, the issuer entity 130 determines a signature of the revocation hash H3 based on the private issuer key PRIVATE_OEM_KEY. The revocation hash H3 and the signature together form the attestation revocation associated with the device attestation 300.

At a step 503, the issuer entity 130 transmits the attestation revocation to the public registry 110, so that the public registry 110 publishes the attestation revocation.

At a step 504, the public registry 110 publishes the received attestation revocation.

At a step 505, the public registry 110 may send a confirmation to the issuer entity 130, indicating that the attestation revocation has been published in the public registry 110.

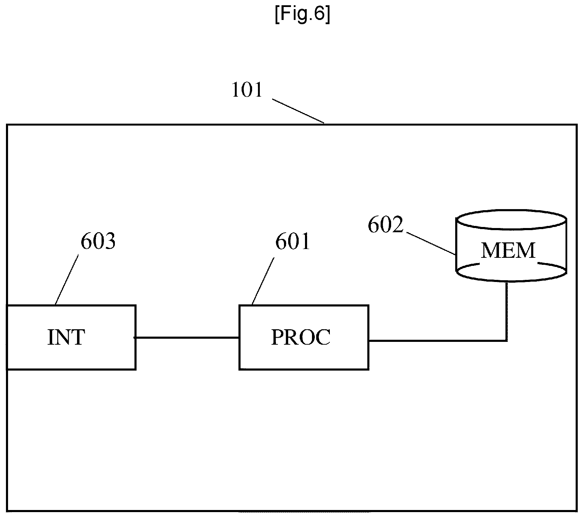

Figure 6 shows a structure of the device 101, according to some embodiments of the disclosure.

The device 101 comprises a processor 601 and a memory 602.

The processor 601 may comprise one or multiple microprocessors, a Central Processing Unit (CPU), on a single Integrated Circuit (IC) or several IC chips.

No restriction is attached to the memory 602, which may be any non-transient, tangible form of memory. For example, it can comprise ROM, RAM, EEPROM and/or flash memory. The processor 601 may be programmable and may be configured to execute instructions that are stored in its internal memory or to execute instructions that are stored in the memory 602.

In particular, the memory 602 may store the digital wallet 102 is the form of an application that can be executed by the processor 601. The device 101 may also comprise an embedded Secure Element, eSE, as previously described.

The memory 602 can store instructions for implementing the steps 210, to 212, 214, 221 to 223, 230 to 232, 401 to 404 and 418, described above.

In addition, the memory 602 can store the device attestation 300 described above.

The device 101 further comprises a network interface 603 configured to access the communication network 100, to communicate with the other entities of the system illustrated on figure 1.

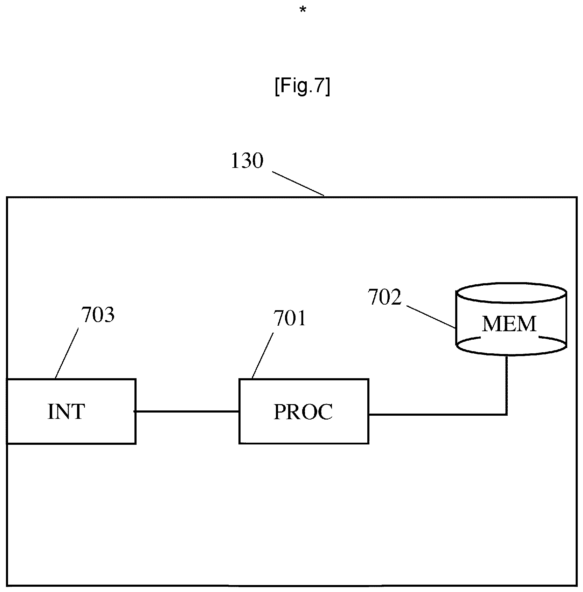

Figure 7 shows the structure of an issuer entity 130 according to some embodiments of the disclosure.

The issuer entity 130 comprises a processor 701 and a memory 702.

The processor 701 may comprise one or multiple microprocessors, a Central Processing Unit (CPU), on a single Integrated Circuit (IC) or several IC chips.

No restriction is attached to the memory 702, which may be any non-transient, tangible form of memory. For example, it can comprise ROM, RAM, EEPROM and/or flash memory. The processor 701 may be programmable and may be configured to execute instructions that are stored in its internal memory or to execute instructions that are stored in the memory 702.

The memory 702 can store instructions for implementing the steps 201 to 203, 205, 220, 221, 223 to 226, 227, 239, 232, 414, 415, 500 to 503 and 505 described above.

The issuer entity 130 further comprises a network interface 703 configured to access the communication network 100, to communicate with the other entities of the system illustrated on figure 1.

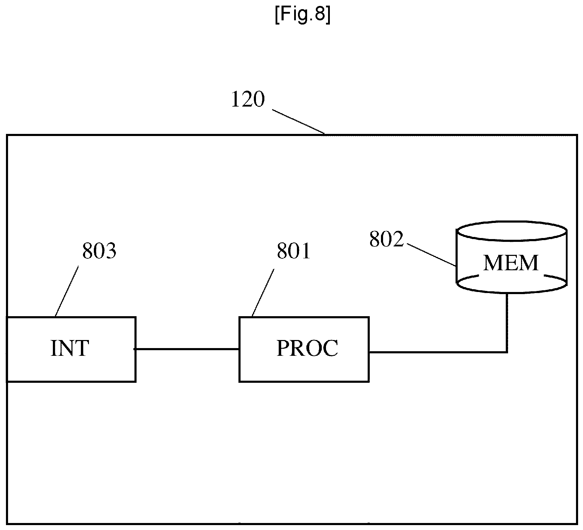

Figure 8 shows the structure of a verifier entity 120 according to some embodiments of the disclosure.

The verifier entity 120 comprises a processor 801 and a memory 802.

The processor 801 may comprise one or multiple microprocessors, a Central Processing Unit (CPU), on a single Integrated Circuit (IC) or several IC chips.

No restriction is attached to the memory 802, which may be any non-transient, tangible form of memory. For example, it can comprise ROM, RAM, EEPROM and/or flash memory. The processor 801 may be programmable and may be configured to execute instructions that are stored in its internal memory or to execute instructions that are stored in the memory 802.

The memory 802 can store instructions for implementing the steps 400, 401, 404 to 406, 408 to 410, 412 to 418 described above.

The verifier entity 120 further comprises a network interface 803 configured to access the communication network 100, to communicate with the other entities of the system illustrated on figure 1.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of verifying a device (101) by a verifier entity (120) in a communications network (100), the method comprising:
- receiving (221) by the device, from an issuer entity, information derived from device information descriptive of the device or of a component of the device;
- determining (222) binding data, by the device, the binding data comprising the information derived from the device information and being signed by the device;
- transmitting (223) the binding data to the issuer entity;
- receiving (230), by the device and from the issuer entity, a device attestation (300) comprising the device information, the binding data and a signature of the issuer entity;
- storing (231) the device attestation in the device;
wherein, upon reception (401) of a verification request from a verifier entity, the device presents (402-404) the device attestation to the verifier entity.

2. The method according to claim 1, wherein the device attestation (300) has a data structure of a Verifiable Credential, VC, comprising:
- a claim section (310) comprising the binding data and the device information;
- a VC proof section (320) comprising an attestation proof, the attestation proof being the signature of the issuer entity; and
wherein presenting the device attestation comprises generating a presentation (330) of the device attestation, the presentation have a data structure of a Verifiable Presentation, VP, comprising:
- a VC section (340) comprising the device attestation;
- a VP proof section (350) comprising a presentation proof, wherein the presentation proof is a signature of the VC section by the device (101).

3. The method according to one of the preceding claims, wherein the verification request is received (401) by the device (101) after the device transmits (400) a service request to the verifier entity (120), in order to access to a service provided by the verifier entity;
wherein the verifier entity performs (413) at least one verification on the presentation (330) of the device attestation (300), and wherein the service is executed (417; 418) by the verifier entity if the at least one verification is positive.

4. The method according to claim 3, wherein the service comprises generating (417) a digital credential and transmitting (418) the digital credential to the device (101), for storage in a digital wallet (102) or in a secure element of the device.

5. The method according to claim 2 and to claim 3 or 4, wherein the at least one verification performed (413) by the verifier entity (120) comprises:
- verification of the attestation proof; and/or
- verification of the presentation proof; and/or
- verification that the binding data is signed by the same device as the presentation proof.

6. The method according to one of claims 3 to 5, wherein the at least one verification comprises a verification (409-412) that an attestation revocation associated with the device attestation has not been published in a public registry (110).

7. The method according to one of the preceding claims, wherein the issuer entity (130), upon reception (223) of the binding data from the device, generates (224) the device attestation (300), transmits (230) the device attestation to the device (101), and stores (226) a hash H1 of the device attestation in a public registry (110).

8. The method according to claim 6 and 7, wherein the attestation revocation is a revocation hash obtained by hashing a predetermined string with the hash H1 of the device attestation (300).

9. The method according to claim 6 and to claim 7 or 8, wherein, upon detection (500) of a predetermined event by the issuer entity (130), the issuer entity generates (501; 502) an attestation revocation of the device attestation (300), and transmits (503) the attestation revocation to the public registry (110).

10. The method according to one of the preceding claims, wherein the device information comprises one or several of the following information:
- a unique identifier of the device (101), of a secure element of the device and/or of a digital wallet (102) of the device; and/or
- a type of secure area of the device; and/or
- information regarding cryptographic protocols and key derivation mechanisms, supported by the device, by the secure element of the device and/or by the digital wallet of the device; and/or
- information regarding cryptographic primitives supported by the device, by the secure element of the device and/or by the digital wallet of the device; and/or
- information related to security mechanisms of the device, of the secure element of the device and/or of the digital wallet of the device.

11. The method according to one of the preceding claims, wherein the device (101) receives the device information and a first nonce from the issuer entity (130), and wherein the binding data comprises a hash of the device information, the first nonce and an identifier of the device.

12. The method according to claim 11, wherein, upon receiving of the binding data, the issuer entity (130) generates a second nonce, and wherein the device attestation (300) comprises the hash of the device information, the binding data, the second nonce and the signature of the issuer entity.

13. A computer program comprising instructions arranged for implementing the method according to one of the preceding claims, when said instructions are executed by a processor (601).

14. A device (101) comprising a network interface and a processor (601) configured for:
- receiving information derived from device information, from an issuer entity (130), the device information being descriptive of the device or of a component of the device;
- determining binding data comprising the information derived from the device information and being signed by the device;
- transmitting the binding data to the issuer entity;
- receiving, from the issuer entity, a device attestation comprising the device information, the binding data and a signature of the issuer entity;
- storing the device attestation in a memory of the device;
wherein, upon reception of a request to control the device from a verifier entity, the processor is further configured for presenting the device attestation to the verifier entity

15. A system comprising the device according to claim 14, an issuer entity and a verifier entity.
